(19) **Europäisches Patentamt / European Patent Office / Office européen des brevets**

(11) **EP 4 657 544 A1**

(12) **EUROPEAN PATENT APPLICATION**

(43) Date of publication:
**03.12.2025 Bulletin 2025/49**

(21) Application number: **25168774.5**

(22) Date of filing: **07.04.2025**

(51) International Patent Classification (IPC):
*H01M 4/131* (2010.01)    *H01M 4/136* (2010.01)
*H01M 4/36* (2006.01)    *H01M 4/525* (2010.01)
*H01M 4/58* (2010.01)    *H01M 4/62* (2006.01)
*H01M 10/0525* (2010.01)    *H01M 4/02* (2006.01)

(52) Cooperative Patent Classification (CPC):
**H01M 4/525; H01M 4/131; H01M 4/136;
H01M 4/364; H01M 4/366; H01M 4/5825;
H01M 4/625; H01M 10/0525;** H01M 2004/021;
H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.04.2024   KR 20240055008**

(71) Applicant: **SAMSUNG SDI CO., LTD.**
**Yongin-si, Gyeonggi-do 17084 (KR)**

(72) Inventors:
• **KIM, Young-Ki**
  **Yongin-si (KR)**

• **LEE, Soonrewl**
  **Yongin-si (KR)**
• **CHOI, Aram**
  **Yongin-si (KR)**
• **KIM, Sangmi**
  **Yongin-si (KR)**
• **DOO, Sungwook**
  **Yongin-si (KR)**
• **KANG, Gwiwoon**
  **Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(57)    A positive electrode active material for a rechargeable battery includes first particles comprising a first Li compound having a first average particle diameter, and second particles comprising a second Li compound having a second average particle diameter that is smaller than the first average particle diameter, and the content of the first particles is greater than the content of the second particles. Also disclosed are a positive electrode comprising the positive electrode active material, and a rechargeable lithium battery including the positive electrode.

FIG. 6B

**Description**

BACKGROUND

The present disclosure relates to a positive electrode active material for a rechargeable lithium battery, a positive electrode including the positive electrode active material, and a rechargeable lithium battery including the positive electrode active material. In particular, the present disclosure relates to a positive electrode active material including an olivine-based lithium compound, a positive electrode including the positive electrode active material, and a rechargeable lithium battery including the positive electrode active material.

With increasing use of electronic devices that use batteries, such as, e.g., mobile phones, laptop computers, electric vehicles, and the like, the demand for rechargeable batteries with high energy density and high capacity is increasing. Accordingly, improving the performance of rechargeable lithium batteries may be advantageous.

A rechargeable lithium battery typically is a battery including a positive electrode and a negative electrode containing active materials capable of intercalation and deintercalation of lithium ions, and an electrolyte, and produces electrical energy through the oxidation and reduction reactions when lithium ions are intercalated into and deintercalated from the positive electrode and negative electrode.

Technologies using mixtures of different lithium transition metal oxides as positive electrode materials are being examined to provide positive electrode active materials with high energy density, high operating voltage, and high conductivity.

SUMMARY

The present disclosure provides a positive electrode active material having high energy density, a high operating voltage and high conductivity.

The present disclosure also provides a rechargeable lithium battery having high energy density, a high operating voltage and high low-temperature properties.

In a first aspect, the present invention provides a positive electrode active material that includes first particles including a compound of Chemical Formula 1 below and having a first average particle diameter, and second particles including a compound of Chemical Formula 2 below and having a second average particle diameter, where the content of the first particles is greater than the content of the second particles.

$$\text{Chemical Formula 1:} \qquad \text{Li}_{a1}\text{Mn}_{z1}\text{Fe}_{x1}\text{A}_{y1}\text{PO}_{4-c1}$$

In Chemical Formula 1, $0.8 < a1 \leq 1.2$, $0.3 \leq x1 \leq 0.7$, $0 \leq y1 \leq 0.05$ (e.g., $0.001 \leq y1 \leq 0.05$), $0.3 \leq z1 \leq 0.7$, $0 \leq c1 \leq 0.05$, $x1 + y1 + z1 = 1$, and A includes at least one of Ti, Mg, V and Nb.

$$\text{Chemical Formula 2:} \qquad \text{Li}_{a2}\text{Co}_{z2}\text{D}_{x2}\text{O}_{c2}$$

In Chemical Formula 2, $1 < a2 \leq 1.5$, $0.9 \leq z2 \leq 1.0$, $0 \leq x2 \leq 0.05$ (e.g., $0.001 \leq x2 \leq 0.05$), $2 \leq c2 \leq 2.3$, and $x2+z2=1$, and D includes at least one of Al, Ti and Mg.

In a second aspect the present invention provides a positive electrode for a rechargeable lithium battery including a positive electrode current collector, and a positive electrode active material layer on the positive electrode current collector, where the positive electrode active material layer includes the aforementioned positive electrode active material, a conductive material and a binder.

In a third aspect the present invention provides a rechargeable lithium battery including the aforementioned positive electrode, a negative electrode including a negative electrode current collector and a negative electrode active material layer on the negative electrode current collector, and a separator between the positive electrode and the negative electrode.

At least some of the above and other features of the invention are set out in the claims.

BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, serve to explain principles of the present disclosure.

FIG. 1 is a simplified conceptual diagram illustrating a rechargeable lithium battery according to some example embodiments of the present disclosure.

FIGS. 2 to 5 are simplified diagrams illustrating rechargeable lithium batteries according to some example embodiments, where FIG. 2 is a cylindrical battery, FIG. 3 is a prismatic battery, and FIGS. 4 and 5 are pouch-type batteries.

FIG. 6A is an enlarged view illustrating a positive electrode active material layer of a rechargeable lithium battery, according to an example embodiment of the present disclosure.

FIG. 6B is an enlarged view illustrating a positive electrode active material layer of a rechargeable lithium battery, according to an example embodiment of the present disclosure.

FIG. 7A shows scanning electron microscope (SEM) images of a positive electrode active material of Comparative Example 1-2 of the present disclosure.

FIG. 7B shows scanning electron microscope (SEM) images showing a positive electrode active material of Comparative Example 2-1 of the present disclosure.

DETAILED DESCRIPTION

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

Hereinafter, example embodiments of the present disclosure are described clearly and in detail so that a person skilled in the art may easily implement the present disclosure.

In this description, it is understood that, when an element is referred to as being "on" another element, the element can be directly on the other element, or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise specially defined in this description, a particle diameter may be an average particle diameter. Also, a particle diameter means an average particle diameter ($D_{50}$), which refers to the diameter of particles at a cumulative volume of about 50 vol% in particle size distribution. The average particle diameter ($D_{50}$) may be measured by a method widely known to those skilled in the art, for example, by a particle size analyzer, or by using a transmission electron microscope (TEM) image or a scanning electron microscope (SEM) image. Alternatively, the average particle diameter may be measured by a measurement device using dynamic light-scattering, wherein data analysis is conducted to count the number of particles for each particle size range, and an average particle diameter ($D_{50}$) value may then be obtained through calculation. Also, a laser scattering method may be utilized to measure the average particle diameter. In the laser scattering method, target particles are dispersed in a dispersion medium, then, introduced into a commercial laser diffraction particle-diameter measurement instrument (e.g., MT3000 of Microtrac), and irradiated to ultrasonic waves of about 28 kHz at an output of about 60 W, and the average particle diameter ($D_{50}$) based on about 50% of particle diameter distribution may be calculated in the measurement instrument.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

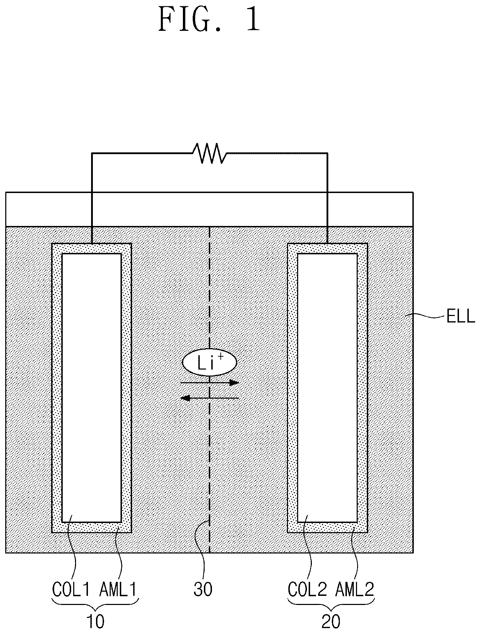

FIG. 1 is a simplified conceptual diagram of a rechargeable lithium battery according to some example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be immersed in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

Positive Electrode 10

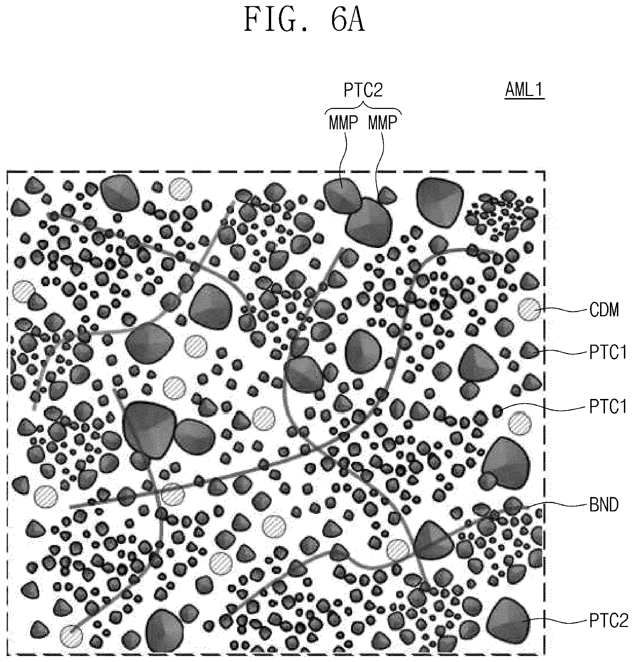

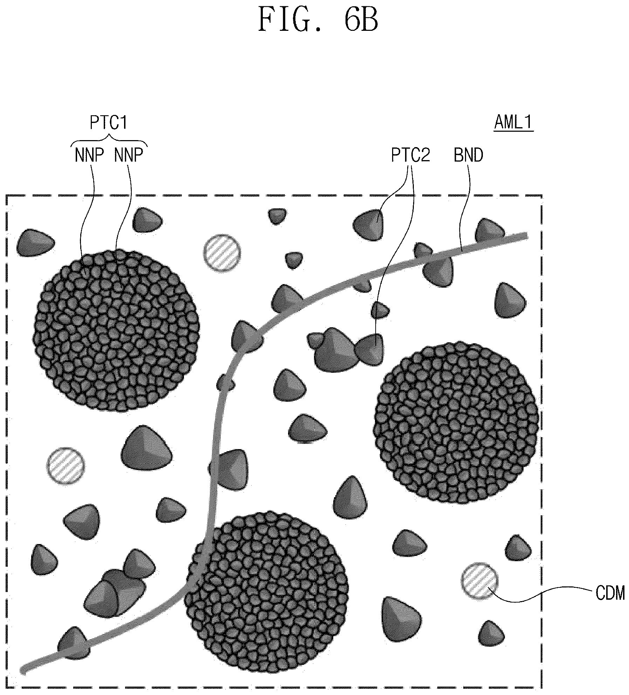

The positive electrode 10 for a rechargeable lithium battery includes a current collector COL1 and a positive electrode active material layer AML1 on the current collector COL1. The positive electrode active material layer AML1 includes a positive electrode active material, a binder and a conductive material. A detailed description of the positive electrode active material layer AML1 according to some example embodiments of the present disclosure is explained below with reference to FIGS. 6A and 6B. Al may be included as the current collector COL1, but the current collector COL1is not limited thereto.

Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material.

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may be configured to attach the negative electrode active material particles to each other, and also to attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, poly-amideimide, polyimide, or a combination thereof.

The aqueous binder may be or include at least one of a styrene-butadiene rubber, a (meth)acrylated styrene-butadiene rubber, a (meth)acrylonitrilebutadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoridehexafluoropropylene copolymer, polyethylene oxide, or a combination thereof.

The conductive material may be configured to impart conductivity to the electrode. Any material that does not cause chemical change and is an electron conductive material may be used in the battery. Examples of the conductive material may include a carbon-based material such as or including at least one of natural graphite, artificial graphite, carbon black, acetylene black, Ketjen black, a carbon fiber, a carbon nanofiber, and carbon nanotube; a metal-based material including at least one of copper, nickel, aluminium, silver, etc., in a form of a metal powder or a metal fiber; a conductive polymer such as a polyphenylene derivative; or a mixture thereof.

The current collector COL2 may use at least one of a copper foil, a nickel foil, a stainless steel foil, a titanium foil, a nickel foam, a copper foam, a polymer substrate coated with a conductive metal, or a combination thereof.

Negative Electrode Active Material

The negative electrode active material in the negative electrode active material layer AML2 may include at least one of a material that reversibly intercalates/deintercalates lithium ions, a lithium metal, a lithium metal alloy, a material capable of doping into and de-doping from lithium, or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as non-shaped, sheet-shaped, flake-shaped, substantially sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal that is or includes at least one of Na, K, Rb, Cs, Fr, Be, Mg, Ca, Sr, Si, Sb, Pb, In, Zn, Ba, Ra, Ge, Al, and Sn.

The material capable of doping into and de-doping from lithium may be or include at least one of a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline earth metal, a Group 13 element, a Group 14 element (except for Si), a Group 15 element, a Group 16 element, a transition metal, a rare-earth element, and a combination thereof), or a combination thereof. The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core), in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be combined with a carbon-based negative electrode active material.

Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof, on one or both surfaces of the porous substrate.

The porous substrate may be or include a polymer film formed of or including any one of a polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene, e.g. TEFLON, or a copolymer or mixture of two or more thereof.

The organic material may include a polyvinylidene fluoride-based polymer or a (meth)acrylic polymer.

The inorganic material may include inorganic particles such or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more solvents.

In examples, when the solvent is or includes a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent is configured to supply lithium ions in a battery, enable a basic operation of a rechargeable lithium battery, and improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)borate (LiDFOB), lithium difluorobis(oxalato)phosphate (LiDFBOP), and lithium bis(oxalato)borate (LiBOB).

Rechargeable Lithium Battery

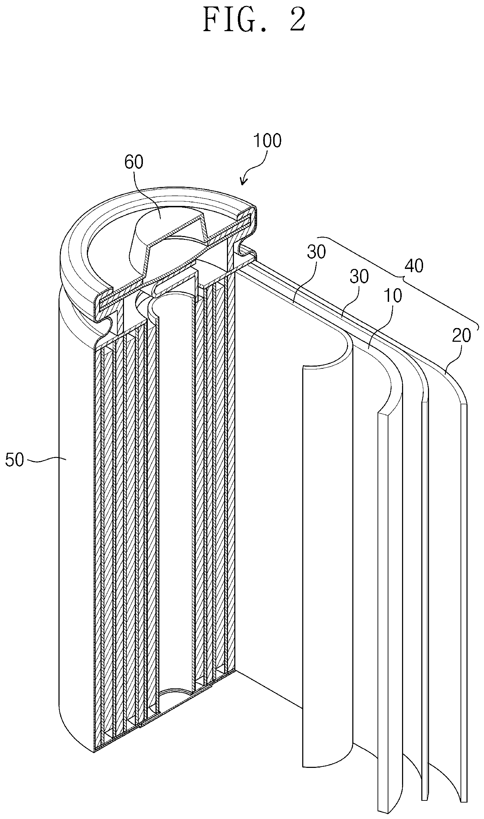

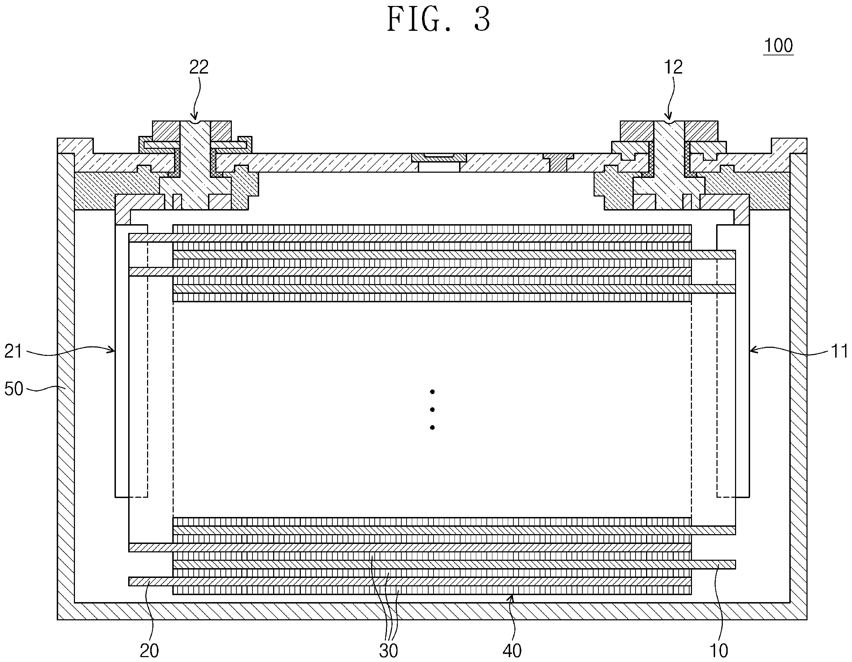

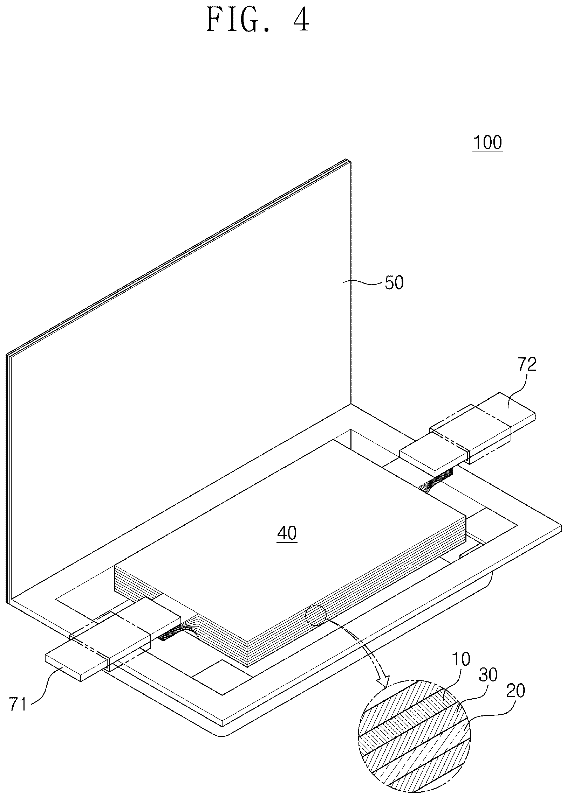

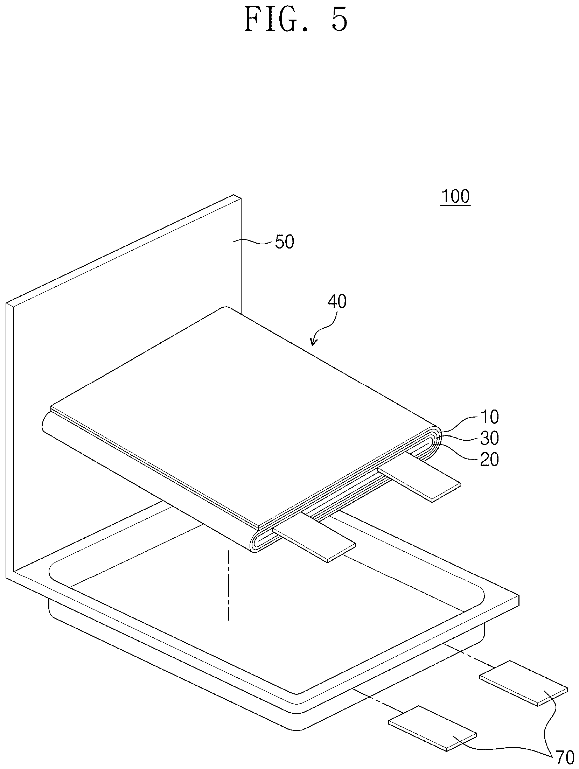

The rechargeable lithium battery may be classified into cylindrical, prismatic, pouch, or coin-type batteries, and the like, depending on their shape. FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as illustrated in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, and may include, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to automobiles, mobile phones, and/or various types of electric devices, as non-limiting examples.

FIG. 6A and FIG. 6B each illustrates an enlarged view showing a positive electrode active material layer of a rechargeable lithium battery, according to an example embodiment of the present disclosure. In FIG. 6A and FIG. 6B, a positive electrode active material layer AML1 (see FIG. 1) includes first particles PTC1, second particles PTC2, a conductive material CDM, and a binder BND. A plurality of the first particles PTC1 and a plurality of the second particles PTC2 constitute a positive electrode active material according to the present invention.

The content of the positive electrode active material (PTC1 and PTC2) in the positive electrode active material layer AML1 may range from about 90 wt% to about 99 wt% relative to about 100 wt% of the positive electrode active material layer AML1. Each, or at least one, of the contents of the binder BND and the conductive material CDM may be in a range of about 0.5 wt% to about 5 wt% relative to about 100 wt% of the positive electrode active material layer AML1.

The binder BND may combine the first particles PTC1, the second particles PTC2, and the conductive material CDM with each other. For example, the binder BND may include at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the present disclosure is not limited thereto.

The conductive material CDM may be configured to improve the conductivity of the positive electrode active material layer AML1. Any conductive material that does not cause a chemical change of the positive electrode active material layer AML1 may be used without limitation as the conductive material CDM. For example, the conductive material CDM may include a carbon-based material such as or including at least one of natural graphite, artificial graphite, carbon black, acetylene black, Ketjen black, carbon fiber, carbon nano-fiber, and carbon nano-tube; a metal-based material containing at least one of copper, nickel, aluminium, silver or the like and having a metal powder or metal fiber form; a conductive polymer such as a polyphenylene derivative; or a mixture thereof.

**First Particle PTC1**

The first particle PTC1 includes an olivine-based lithium compound represented by Chemical Formula 1 below.

Chemical Formula 1: $\quad Li_{a1}Mn_{z1}Fe_{x1}A_{y1}PO_{4-c1}$

In Chemical Formula 1, $0.8 < a1 \leq 1.2$, $0.3 \leq x1 \leq 0.7$, $0 \leq y1 \leq 0.05$ (e.g., $0.001 \leq y1 \leq 0.05$), $0.3 \leq z1 \leq 0.7$, $0 \leq c1 \leq 0.05$, and $x1 + y1 + z1 = 1$ is satisfied.

A includes at least one of Ti, Mg, V and Nb. A may be includes as a dopant doped in the first particle PTC1.

When the first particle PTC1 is doped with Ti, the effect of controlling the growth of the first primary particles NNP of the first particle PTC1 may be shown, and as a result, the size of the first primary particles NNP of the first particle PTC1 may be formed smaller. When Ti is doped in the first particle PTC1, the size of the first primary particles NNP may be grown substantially uniformly, and as a result, low-temperature properties may be improved.

Referring to FIG. 6A, the first particle PTC1 may have a single particle form. In the description, the single particle may indicate a sole particle that does not have a grain boundary inside. The single particle has a morphology phase, and may mean a single particle, a monolith structure, a monolithic structure, or a non-agglomerated particle in which the particles exist as an independent phase that are not agglomerated. For example, the single particle may be a single crystal. In addition, the single particle may be or include a particle containing several crystals. The single particle may be a solely separated particle. Otherwise, the single particle may be in the form of 2 to 100 first primary particles attached to each other.

As used herein, an average particle diameter may indicate the diameter ($D_{50}$) of particles at an accumulated volume of about 50 vol% in particle size distribution.

The average particle diameter ($D_{50}$) of the first particles PTC1 may be a value measured by a particle size analyzer. As a result, the average particle diameter ($D_{50}$) of the first particles PTC1 in a single particle form may be in a range of about 0.5 $\mu$m to about 2.5 $\mu$m. The average particle diameter of the first particles PTC1 according to this example embodiment may be smaller than the average particle diameter ($D_{50}$) of the second particles PTC2, which is explained below.

The first particle PTC1 according to this example embodiment may include at least one primary particle (or single particle). The size of the at least one first primary particle comprised in one first particle PTC1 according to this example embodiment may be, when measured by a scanning electron microscope (SEM), in a range of about 50 nm to about 200 nm, preferably about 100 nm to about 200 nm. In an example embodiment, the size of the first primary particles may indicate the diameter measured by randomly selecting about 30 first primary particles on an electron microscope image on the positive electrode active material. The size of the first primary particles may be substantially uniform.

In an example embodiment, the first particle PTC1 may include a first coating layer on the surface thereof. The coating layer may cover the entire surface of the first particle PTC1, or may cover a portion of the surface of the first particle PTC1. For example, the coating layer may include carbon and/or a carbon-containing compound. The first coating layer may further include at least one of a titanium-containing compound, a magnesium-containing compound and a vanadium-containing compound. A metal-containing compound such as the titanium-containing compound, the magnesium-containing compound, and the vanadium-containing compound may be or include, for example, at least one of a metal oxide, a metal hydroxide, a metal carbonate, a synthesized compound thereof or a mixture thereof. The metal-containing compound may further include other metal or non-metal elements. For example, the metal-containing compound may further include lithium. The first particle PTC1 may have improved structural stability and improved electrical conductivity by the coating layer.

FIG. 6B is an enlarged view of a positive electrode active material layer of a rechargeable lithium battery, according to another example embodiment of the present disclosure. In another example embodiment, referring to FIG. 6B, the first particle PTC1 may have a polycrystal form, and may include a secondary particle in which at least two or more first primary particles NNP are agglomerated. In other words, one first particle PTC1 may include a plurality of first primary particles NNP agglomerated with each other. The first particle PTC1 composed of a plurality of the first primary particles NNP may have a substantially spherical or substantially elliptical shape.

In an example embodiment, the first particle PTC1 may include a coating layer on the surface thereof. The coating layer may cover the entire surface of the first particle PTC1 or a portion of the surface of the first particle PTC1. The coating layer may be present in the first particle PTC1. The coating layer may be formed along the interface between the particles in the first particle PTC1. For example, the coating layer may include carbon and/or a carbon-containing compound. The first particle PTC1 may have improved structural stability due to the coating layer, and a substantially uniform coating layer may be formed on the surface of the first particle PTC1. By further including the coating layer, electrical conductivity may be improved.

The coating layer may further include at least one of a titanium-containing compound, a magnesium-containing compound and a vanadium-containing compound. A metal-containing compound such as the titanium-containing compound, the magnesium-containing compound and the vanadium-containing compound may be or include, for example, at least one of a metal oxide, a metal hydroxide, a metal carbonate, a synthesized compound thereof or a mixture thereof. The metal-containing compound may further include other metal or non-metal elements. For example, the metal-containing compound may further include lithium.

In an example embodiment, the first particle PTC1 may further include a grain boundary coating layer on the surface of each, or at least one, of the first primary particles NNP. The grain boundary coating layer may be present in the first particle PTC1. The grain boundary coating layer may be formed along the interface between the first primary particles NNP in the first particle PTC1. In other words, the grain boundary coating layer may indicate a material coated on the grain boundary in the first particle PTC1.

The grain boundary coating layer may include carbon and/or a carbon-containing compound. The grain boundary coating layer may further include at least one of a titanium-containing compound, a magnesium-containing compound and a vanadium-containing compound.

The interior of the above-described first particle PTC1 may indicate substantially the entire interior of the first particle PTC1 excluding the surface of the first particle PTC1. For example, the interior of the first particle PTC1 may indicate substantially an entire interior from a depth of about 10 nm from the surface of the first particle PTC1, or a region from a depth of about 10 nm to a depth of about 2 $\mu$m.

When the first particle PTC1 further includes a grain boundary coating, structural stability may be reinforced, and a substantially uniform coating layer may be formed on the surface of the first particle PTC1. In addition, when the first particle PTC1 further includes a grain boundary coating, the electrical conductivity of the first particle PTC1 may be further improved.

The first particle PTC1 may further include carbon derived from the coating layer and/or grain boundary coating layer. The carbon element content in the first particle PTC1 may be in a range of about 0.5 wt% to about 10 wt%, about 1 wt% to about 3 wt%, or about 1.5 wt% to about 2.5 wt%. In an example embodiment, the carbon content in the first particle PTC1 with a secondary particle form, shown in FIG. 6B may be greater than the carbon content in the first particle PTC1 with a single particle form, shown in FIG. 6A. For example, Thermogravimetric Analysis (TGA) is commonly employed to measure weight loss due to carbon oxidation, providing a quantitative assessment. Additionally, CHNS Elemental Analysis is widely used to determine the carbon content by detecting $CO_2$ generated during combustion. For structural characterization, Raman Spectroscopy can be utilized to distinguish between different forms of carbon, while X-ray Photoelectron Spectroscopy (XPS) is useful for analyzing the chemical bonding states of surface carbon. In some cases, Inductively Coupled Plasma Optical Emission Spectroscopy (ICP-OES) may also be applied for compositional analysis. These methods are generally applicable and widely used in the industry to ensure accurate and reliable measurement of carbon content in electrode materials.

The first particle PTC1 may have a substantially spherical shape in which a plurality of first primary particles NNP are agglomerated. The first particle PTC1 may exhibit the following characteristics due to the close agglomeration of the first primary particles NNP with each other. The coating layer and/or grain boundary coating layer of the first particle may be sufficiently maintained, electrical conductivity may increase, and low-temperature properties may be improved. Because the binding force of electrode plates increases, the amount used of a binder may be reduced. The first particle PTC1 may have a substantially spherical shape or a substantially elliptical shape.

In an example embodiment, the average particle diameter may be measured by a particle size analyzer. The average particle diameter may indicate the diameter ($D_{50}$) of particles at an accumulated volume of about 50 vol% in particle size distribution. Accordingly, the average particle diameter ($D_{50}$) of the first particles PTC1 of this example embodiment may be in a range of about 3 $\mu$m to about 10 $\mu$m.

The first particle PTC1 according to this example embodiment may include at least one primary particle (or single particle). The size of at least one first primary particle NNP constituting one first particle PTC1 may be in a range of about 50 nm to about 150 nm.

In an example embodiment, the size of the first primary particles NNP may indicate a diameter measured by randomly selecting about 30 first primary particles NNP on an electron microscope image on a positive electrode active material. The size of the first primary particles NNP may be substantially uniform.

The porosity of the first particles PTC1 may be in a range of about 20% to about 40%. The porosity (n) may be

$$n = \frac{V_p}{V_t}$$

defined as the pore volume ($V_p$) divided by the total volume ($V_t$) of particles, or:

A span value, which is the standard deviation around the mean value of the first particles PTC1, analyzed by a particle size analyzer, may be in a range of about 0.3 to about 0.75.

When the first particles PTC1 have a secondary particle form, because the first average particle diameter may be large, a relatively small amount of a binder BND may be required to attach the first particles to a current collector COL1 (see FIG. 1). For example, the content of the binder BND may be in a range of about 0.5 wt% to about 3 wt% on the basis of about 100 wt% of a positive electrode active material layer AML1.

A rechargeable lithium battery including the positive electrode active material of the present disclosure may have improved low-temperature properties. In an example embodiment, the ratio of the capacity at about -20°C to the initial capacity (capacity at about -20°C/initial capacity) of a rechargeable lithium battery may be about 40% or more. For example, the ratio of the capacity at about -20°C to the initial capacity (capacity at about -20°C/initial capacity) of a rechargeable lithium battery may be in a range of about 40% to about 100%, about 50% to about 100%, or about 96% to about 99%.

The rechargeable lithium battery including the positive electrode active material of the present disclosure may exhibit an improved operating voltage. In an example embodiment, the operating voltage range of the rechargeable lithium battery of the present disclosure may be about 3 V to about 5 V. For example, the operating voltage range may be about 3 V to about 4.5 V, or about 3.5 V to about 4 V.

The rechargeable lithium battery including the positive electrode active material of the present disclosure may exhibit improved lifetime characteristics. In an example embodiment, the rechargeable lithium battery of the present disclosure may have a capacity retention after charging and discharging 50 times with a constant current of about 0.1 C at the voltage of about 98% or more. For example, the capacity retention may be in a range of about 98% to about 100%, or about 99.8% to about 100%.

Second **Particle** PTC2

The second particle PTC2 may include a layered lithium compound represented by Chemical Formula 2 below.

$$\text{Chemical Formula 2:} \qquad Li_{a2}Co_{z2}D_{x2}O_{c2}$$

In Chemical Formula 2, $1 < a2 \leq 1.5$, $0.9 \leq z2 \leq 1.0$, $0 \leq x2 \leq 0.05$ (e.g., $0.001 \leq x2 \leq 0.05$), $2 \leq c2 \leq 2.3$, and $x2+z2=1$ is satisfied.

D includes at least one of Al, Ti and Mg. D may be included as a dopant doped in the second particle PTC2.

When D comprises both Ti and Mg, the Ti content in the second particle may be smaller than the Mg content in the second particle.

Referring to FIGS. 6A and 6B, a second particle PTC2 may have a single particle form. In this description, "single particle" may indicate a sole particle that does not have a grain boundary inside. The single particle has a morphology phase, and may indicate a single particle, a monolith structure, a monolithic structure, or a non-agglomerated particle in which the particles exist as an independent phase that are not agglomerated. For example, the single particle of the second particle PTC2 may be a single crystal. In an example embodiment, the single particle may have or include a plurality of second primary particles MMP that are attached to each other. Otherwise, the single particle may include 2 to 100 second primary particles MMP attached to each other.

In an example embodiment, an average particle diameter may indicate the diameter ($D_{50}$) of particles at an accumulated volume of about 50 vol% in particle size distribution. The average particle diameter ($D_{50}$) of the second particles PTC2 may be a value measured by a particle size analyzer. Accordingly, the average particle diameter ($D_{50}$) of the second particles PTC2 may be in a range of about 3 $\mu$m to about 6 $\mu$m.

The size of the second primary particles MMP of the second particle PTC2 may be greater than the size of the first primary particles NNP of the first particle PTC1, referring to FIG. 6B.

In an example embodiment, the second particle PTC2 may include a second coating layer on the surface thereof. The coating layer may cover substantially the entire surface of the second particle PTC2, or may cover a portion of the surface of the second particle PTC2. The coating layer may include at least one of a cobaltcontaining compound, a titanium-containing compound and an aluminium-containing compound.

The positive electrode active material according to some example embodiments of the present disclosure is explained in more detail with reference to FIGS. 6A and 6B. The positive electrode active material of the present disclosure includes first particles PTC1 and second particles PTC2.

The first particle PTC1 has an olivine structure, is substantially stable and has high chemical stability. $LiCoO_2$, a compound comprised in the second particle PTC2, has a layered structure, has high electrical conductivity, and has a fast lithium ion diffusion rate. In addition, $LiCoO_2$ may be synthesized into relatively large single crystal particles with several to tens of micrometers in size, and has a large amount of energy per unit volume.

However, when an upper limit voltage is raised to a further increase in the capacity of $LiCoO_2$, which is a compound comprised in the second particle PTC2, phase transition may occur and lifetime characteristics may worsen. In addition, the elution of cobalt (Co) during high-voltage charging, or the local formation of a cobalt oxide ($CoO_2$) layer on an electrode surface, may cause a decrease in the lifetime.

According to the present disclosure therefore, the positive electrode active material includes both the first particles PTC1 and the second particles PTC2.

Various example embodiments of the present disclosure include positive electrode active materials that combine the second particles PTC2, which may have a layered structure, and the first particles PTC1 with an olivine structure, thereby improving energy density and minimizing surface reactivity to ensure high voltage stability.

The second particles PTC2 may be subjected to surface treatment so as to be substantially stable in high voltage situations. The surface of the second particle PTC2 may be coated with at least one of Al, Ti or the like to improve surface safety.

The second particle PTC2 may be doped with a metal element to ensure surface and structural stability. In this case, the metal element may be one or more elements such as or including at least one of Mg, K, Na, Ca, Si, Ti, Zr, Sn, Y, Sr, Mo, and Mn elements.

The second particle PTC2 may be in the form of a single particle or a single crystal. The second particle PTC2 may be a high-voltage material and may achieve higher capacity than the first particle PTC1. In the positive electrode active material according to this example embodiment, the first particles PTC1 and the second particles PTC2 may be mixed at a desired ratio, and capacity and an operating voltage may be improved compared to a common lithium iron phosphate (LFP) battery.

In the present disclosure, by using single particles as the second particles PTC2, electrical conductivity and energy density may be improved.

The positive electrode active material of the present disclosure may improve mixture density, capacity and energy density by mixing second particles PTC2, which may be several micrometers in size, with a base of first particles PTC1, which also may be several micrometers in size. In an example embodiment, the mixture density of the positive electrode active material of the present disclosure may be in a range of about 3.0 g/cc to about 3.5 g/cc. A rechargeable lithium battery including the positive electrode active material of the present disclosure may exhibit improved low-temperature properties.

When the first particles PTC1 are single particles (or primary particles), the size of the first primary particles NNP is substantially small, and a large amount of a binder BND may be required to attach the first particles PTC1 to a current collector COL1 (see FIG. 1). When the second particles PTC2, which may have a large average particle diameter, are additionally included, the positive electrode active material layer AML1 may be smoothly attached to the current collector COL1.

When the first particles PTC1 are formed in a secondary particle form, the binding force of electrode plates may be improved, and the content of the binder BND may be reduced. When the first particles PTC1 are formed in a secondary particle form, carbon coating may be sufficiently maintained, thereby increasing conductivity and improving low-temperature properties. As a result, capacity may increase and lifetime characteristics may be improved.

The mixing ratio of the first particles PTC1 to the second particles PTC2 in the positive electrode active material may be in a range of about 95:5 to about 60:40. Alternatively, the mixing ratio may be about 90:10 to about 70:30. The content of the first particles PTC1 is greater than the content of the second particles PTC2 in the positive electrode active material.

**Comparative Example 1-1: Preparation of First Particles in Single Particle Form**

A $Mn_{0.6}Fe_{0.4}PO_4$ iron phosphate precursor, lithium carbonate and titanium dioxide were mixed in a molar ratio of about 1:1.03:0.004. To the mixture, 10 wt% of glucose was added. A wet grinding process was performed by a ball milling with respect to the mixture. The mixture was evaporated and dried in a heating furnace tray, and put in a vacuum oven for drying at about 120°C for about 4 hours. The dried mixture was baked under a nitrogen atmosphere at about 750°C for about 10 hours. The baked product was ground to obtain first particles in a single particle form. The average size of the first particles was about 200 nm to about 300 nm.

**Comparative Example 1-2: Preparation of First Particles in Secondary Particle Form**

A $Mn_{0.6}Fe_{0.4}PO_4$ iron manganese phosphate precursor, lithium carbonate and titanium dioxide were mixed in a molar ratio of about 1:1.03:0.004. To the mixture, 10 wt% of glucose was additionally added. The mixture that was a slurry was evaporation dried by spray drying the mixture with a spray pressure of about 0.5 MPa and temperature conditions of about 230°C. The dried mixture was baked under a nitrogen atmosphere at about 750°C for about 10 hours to obtain first particles in a secondary particle form. The average size of the primary particles in the first particles was about 100 nm to about 200 nm.

**Comparative Example 2-1: Preparation of Second Particles in Single Particle Form**

Lithium carbonate, $Co_3O_4$ ($D_{50}$: 4.5 $\mu$m), and aluminium hydroxide, $Al(OH)_2$, were mixed so that a molar ratio of Li:Co:Al was about 1.04:0.995:0.005 to obtain a first mixture. The temperature of the first mixture was raised at a temperature elevation rate of about 6°C/min to about 1088°C, and the mixture was subjected to first heat treatment at the temperature under an air atmosphere for about 15 hours and ground to prepare small particles of $Li_{1.04}Co_{0.98}Al_{0.020}O_2$ having a layered structure with an average particle diameter ($D_{50}$) of about 4 $\mu$m. Here, the molar ratio (Li/Me) of lithium to transition metals was about 1.040. The transition metal represents cobalt and aluminium.

Titanium oxide and cobalt hydroxide ($Co(OH)_2$) were added thereto, and the resultant mixture was subjected to second heat treatment at about 900°C to obtain a single crystalline positive electrode active material.

### Comparative Example 2-2: Preparation of Second Particles in Single Particle Form

The doping amount of Al in the second particles of Comparative Example 2-1 was increased.

### Comparative Example 2-3: Preparation of Second Particles in Single Particle Form

The coating amount of Ti on the second particles of Comparative Example 2-2 was increased.

### Example 1-1: Preparation of Mixture of First Particles and Second Particles

A positive electrode active material was prepared by mixing the first particles of Comparative Example 1-2 and the second particles of Comparative Example 2-1 in a mass ratio of about 95:5.

### Example 1-2: Preparation of Mixture of First Particles and Second Particles

A positive electrode active material was prepared by mixing the first particles of Comparative Example 1-2 and the second particles of Comparative Example 2-1 in a mass ratio of about 90:10.

### Example 1-3: Preparation of Mixture of First Particles and Second Particles

A positive electrode active material was prepared by mixing the first particles of Comparative Example 1-2 and the second particles of Comparative Example 2-1 in a mass ratio of about 85:15.

### Example 1-4: Preparation of Mixture of First Particles and Second Particles

A positive electrode active material was prepared by mixing the first particles of Comparative Example 1-2 and the second particles of Comparative Example 2-1 in a mass ratio of about 80:20.

### Example 1-5: Preparation of Mixture of First Particles and Second Particles

A positive electrode active material was prepared by mixing the first particles of Comparative Example 1-2 and the second particles of Comparative Example 2-1 in a mass ratio of about 70:30.

### Example 1-6: Preparation of Mixture of First Particles and Second Particles

A positive electrode active material was prepared by mixing the first particles of Comparative Example 1-2 and the second particles of Comparative Example 2-1 in a mass ratio of about 60:40.

The positive electrode active materials thus prepared are summarized in Table 1 below.

Table 1:

| | Form | Active material | Ti doping (ppm) | Al doping (ppm) | Ti coating (ppm) |
|---|---|---|---|---|---|
| Comparative Example 1-1 | Single particle | $LiMnFePO_4$ (LMFP) | 2000 | - | |
| Comparative Example 1-2 | Secondary particle | $LiMnFePO_4$ (LMFP) | 2000 | - | |
| Comparative Example 2-1 | Single particle | LCO | - | 1400 | 700 |
| Comparative Example 2-2 | Single particle | LCO | - | 2800 | 700 |
| Comparative Example 2-3 | Single particle | LCO | - | 2800 | 1400 |
| Example 1-1 | LMFP (Comparative Example 1-2) 95 wt% + LCO (Comparative Example 2-1) 5 wt% | | | | |

(continued)

| | Form | Active material | Ti doping (ppm) | Al doping (ppm) | Ti coating (ppm) |
|---|---|---|---|---|---|
| Example 1-2 | LMFP (Comparative Example 1-2) 90 wt% + LCO (Comparative Example 2-1) 10 wt% | | | | |
| Example 1-3 | LMFP (Comparative Example 1-2) 85 wt% + LCO (Comparative Example 2-1) 15 wt% | | | | |
| Example 1-4 | LMFP (Comparative Example 1-2) 80 wt% + LCO (Comparative Example 2-1) 20 wt% | | | | |
| Example 1-5 | LMFP (Comparative Example 1-2) 70 wt% + LCO (Comparative Example 2-1) 30 wt% | | | | |
| Example 1-6 | LMFP (Comparative Example 1-2) 60 wt% + LCO (Comparative Example 2-1) 40 wt% | | | | |

### Manufacture of Positive Electrode

95 wt% of a final positive electrode active material, 3 wt% of a polyvinylidene fluoride binder and 2 wt% of a carbon black conductive material were mixed in an N-methylpyrrolidone solvent to prepare a positive electrode active material slurry. The positive electrode active material slurry was applied on an aluminium current collector, dried and rolled to manufacture a positive electrode.

### Manufacture of Negative Electrode

Graphite, a binder and a conductive material were mixed in an N-methylpyrrolidone solvent to prepare a negative electrode active material slurry. The negative electrode active material slurry was applied on a copper current collector, dried and rolled to manufacture a negative electrode.

### Fabrication of Rechargeable Lithium Battery

A 2032 type coin half-cell was formed using the prepared positive electrode and a lithium metal electrode as the counter electrode. A separator (thickness: about 16 $\mu$m) composed of a porous polyethylene (PE) film was disposed between the positive electrode and the lithium metal counter electrode, and an electrolyte solution was injected to fabricate a rechargeable lithium battery. As the electrolyte, an electrolyte solution obtained by mixing 1.3 M $LiPF_6$ with a mixture solvent of ethylene carbonate (EC), ethyl methyl carbonate (EMC) and dimethyl carbonate (DMC) in a volume ratio of about 3:4:3 was used.

### Evaluation Example 1: Analysis of the Surface of the Positive Electrode Active Material

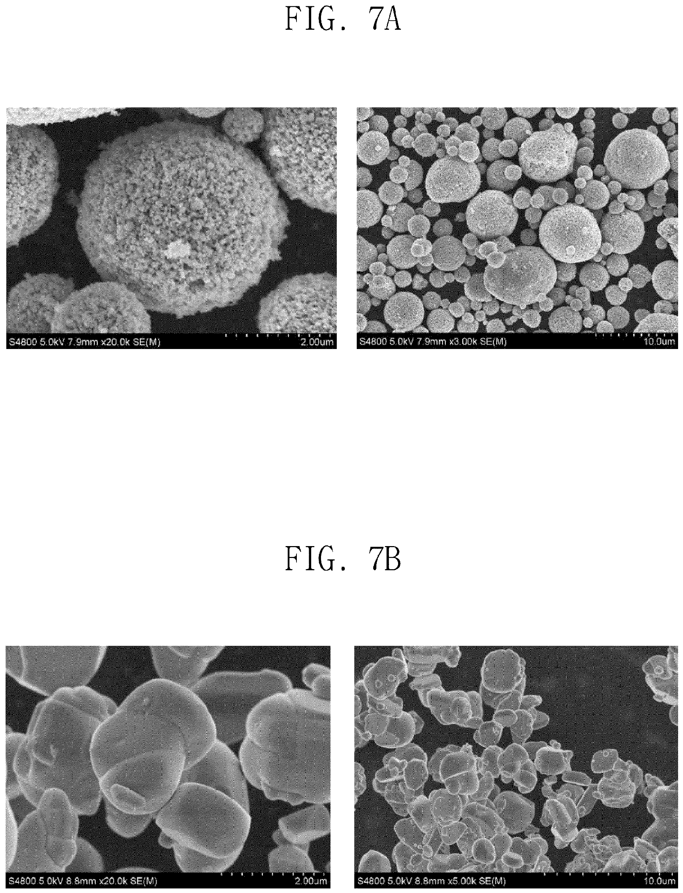

The scanning electron microscope (SEM) images of the first particles prepared in Comparative Example 1-2 are shown in FIG. 7A. The SEM images of the second particles prepared in Comparative Example 2-1 are shown in FIG. 7B. Referring to FIG. 7A, the first particles according to the present disclosure have assembled particles with a substantially spherical type and several micrometers in size. Referring to FIG. 7B, the second particles according to the present disclosure have a single crystal form with several micrometers in size. The second particle has a single crystal form or a form in which a plurality of single particles are attached to each other.

### Evaluation Example 2: Evaluation of Battery Properties

The properties of the rechargeable lithium batteries fabricated using the positive electrode active materials of the Examples and Comparative Examples were evaluated.

Rechargeable lithium batteries were initially charged under constant current (about 0.2 C) and constant voltage (about 4.25 V) conditions, and after resting for about 10 minutes, discharged until about 2.5 V under constant current (about 0.2 C) conditions to carry out initial charging and discharging. Then, charging and discharging were performed 50 times with about 0.2 C/0.2 C. In addition, a new coin cell was fabricated to evaluate capacity at about -20 degrees, and 0.2 C capacity at about -20 degrees was measured for a cell charged/discharged once under constant current (about 0.2 C) and constant voltage (about 4.25 V) conditions and in a charged state. The evaluation results on battery properties are shown in Table 2 below.

Table 2:

| | Coin half-cell | | | | | |
|---|---|---|---|---|---|---|
| | Charge amount (mAh/g) | Discharge amount (mAh/g) | Efficiency (%) | -20 °C capacity (mAh/g) | Average voltage (V) | Lifetime (%, @50cy) |
| Comparative Example 1-1 | 146.1 | 136.2 | 93.2 | 96 | 3.60 | 99.1 |
| Comparative Example 1-2 | 149.2 | 139.4 | 93.4 | 126 | 3.60 | 99.8 |
| Comparative Example 2-1 | 186.0 | 178.6 | 96.0 | 60 | 3.79 | 99.1 |
| Comparative Example 2-2 | 185.6 | 177.2 | 95.5 | 61 | 3.79 | 99.3 |
| Comparative Example 2-3 | 185.2 | 176.3 | 95.2 | 65 | 3.79 | 98.5 |
| Example 1-1 | 151.0 | 141.3 | 93.6 | 121 | 3.60 | 99.4 |
| Example 1-2 | 152.8 | 143.2 | 93.7 | 112 | 3.62 | 99.6 |
| Example 1-3 | 154.7 | 145.1 | 93.8 | 105 | 3.64 | 99.6 |
| Example 1-4 | 156.5 | 147.0 | 93.9 | 100 | 3.67 | 99.7 |
| Example 1-5 | 160.1 | 150.8 | 94.2 | 85 | 3.69 | 99.7 |
| Example 1-6 | 163.8 | 154.5 | 94.4 | 76 | 3.70 | 99.6 |

Referring to Table 2, the rechargeable batteries according to Examples 1-1 to 1-6 of the present disclosure have improved average voltage and both charge and discharge capacity compared to the rechargeable batteries according to Comparative Examples 1-1 and 1-2. The rechargeable batteries according to Examples 1-1 to 1-6 of the present disclosure have improved capacity at about -20°C compared to the rechargeable batteries according to Comparative Examples 2-1 to 2-3. Further, the rechargeable batteries according to Examples 1-1 to 1-4 have markedly improved capacity at about -20°C compared to the rechargeable batteries according to Examples 1-5 and 1-6.

**Evaluation Example 3: Evaluation of Active Material**

The average mixture pellet density (PD) of the positive electrode active materials of Examples and Comparative Examples were measured, and the results are shown in Table 3.

Table 3:

| Division | Pellet density (g/cc) |
|---|---|
| Comparative Example 1-1 | 2.35 |
| Comparative Example 1-2 | 2.41 |
| Comparative Example 2-1 | 3.20 |
| Comparative Example 2-2 | 3.22 |
| Comparative Example 2-3 | 3.15 |
| Example 1-1 | 2.54 |
| Example 1-2 | 2.60 |
| Example 1-3 | 2.71 |
| Example 1-4 | 2.75 |
| Example 1-5 | 2.80 |
| Example 1-6 | 2.84 |

Referring to Table 3, the positive electrode active materials according to Examples 1-1 to 1-6 of the present disclosure have increased average mixture pellet density compared to the positive electrode active material of Comparative Example 1-1 or 1-2.

**Evaluation Example 4: Evaluation of Single-Panel Cell Battery Performance**

A single-panel cell was fabricated using a graphite negative electrode. Battery performance of the single-panel cell is shown in Table 4.

Table 4:

| | Single-panel cell (Negative electrode: Graphite) | |
| --- | --- | --- |
| | Positive electrode utilization (mAh/g) | Capacity per volume (mAh/cc) |
| Comparative Example 1-1 | 133.7 | 314 |
| Comparative Example 1-2 | 136.5 | 329 |
| Comparative Example 2-1 | 170.2 | 545 |
| Comparative Example 2-2 | 169.8 | 547 |
| Comparative Example 2-3 | 169.5 | 534 |
| Example 1-1 | 138.2 | 351 |
| Example 1-2 | 139.8 | 364 |
| Example 1-3 | 141.5 | 384 |
| Example 1-4 | 143.2 | 394 |
| Example 1-5 | 146.5 | 410 |
| Example 1-6 | 149.8 | 426 |

Energy density may be evaluated as positive electrode utilization or capacity per volume. The positive electrode utilization may be defined as the capacity of a rechargeable battery fabricated per the mass of a positive electrode active material.

Referring to Table 4, the energy density of the batteries including the positive electrode active materials according to Examples 1-1 to 1-6 are improved compared to the batteries including the positive electrode active materials according to Comparative Examples 1-1 and 1-2.

A positive electrode active material according to the present disclosure may include first particles with an olivine structure and single crystal second particles that are several micrometers in size. As a result, the mixture density, capacity, high voltage properties and energy density of the positive electrode active material may be improved. A positive electrode active material layer according to the present disclosure may be smoothly attached to a positive electrode current collector even with a relatively small amount of a binder. A rechargeable lithium battery according to the present disclosure may have a relatively high average voltage.

Although the example embodiments of the present disclosure have been described, it is understood that the present disclosure should not be limited to these example embodiments, but various changes and modifications can be made by one ordinary skilled in the art within the scope of the present disclosure as hereinafter claimed.

Certain embodiments are set out in the following clauses:

Clause 1. A positive electrode for a rechargeable lithium battery, the positive electrode comprising: a positive electrode current collector; and a positive electrode active material layer on the positive electrode current collector, wherein the positive electrode active material layer includes the positive electrode active material as defined herein and in the accompanying claims, a conductive material and a binder.

Clause 2. The positive electrode for a rechargeable lithium battery of Clause 1, wherein the binder content is in a range of about 0.5 parts by weight to about 5 parts by weight on the basis of about 100 parts by weight of the positive electrode active material layer.

Clause 3. The positive electrode for a rechargeable lithium battery of Clause 1 or Clause 2, wherein the binder comprises at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon.

Clause 4. The positive electrode for a rechargeable lithium battery of any preceding Clause, wherein the conductive material content is in a range of about 0.5 parts by weight to about 5 parts by weight on the basis of about 100 parts by weight of the positive electrode active material layer.

Clause 5. The positive electrode for a rechargeable lithium battery of any preceding Clause, wherein the conductive material comprises at least one of: a carbon-based material including at least one of natural graphite, artificial graphite, carbon black, acetylene black, Ketjen black, carbon fiber, carbon nano-fiber, and carbon nano-tube; a metal-based material including at least one of copper, nickel, aluminium or silver and having a metal powder or metal fiber form; and a conductive polymer including a polyphenylene derivative.

Clause 6. A rechargeable lithium battery, comprising: the positive electrode according to any of Clauses 1 to 5; a negative electrode including a negative electrode current collector and a negative electrode active material layer on the negative electrode current collector; and a separator between the positive electrode and the negative electrode.

**Claims**

1. A positive electrode active material, comprising:

   first particles including a compound of Chemical Formula 1 and having a first average particle diameter; and
   second particles including a compound of Chemical Formula 2 and having a second average particle diameter, wherein a content of the first particles is greater than a content of the second particles:

   $$\text{Chemical Formula 1:} \qquad Li_{a1}Mn_{z1}Fe_{x1}A_{y1}PO_{4-c1}$$

   in Chemical Formula 1, $0.8 < a1 \leq 1.2$, $0.3 \leq x1 \leq 0.7$, $0 \leq y1 \leq 0.05$, $0.3 \leq z1 \leq 0.7$, $0 \leq c1 \leq 0.05$, and $x1 + y1 + z1 = 1$, and A comprises at least one of Ti, Mg, V and Nb,

   $$\text{Chemical Formula 2:} \qquad Li_{a2}Co_{z2}D_{x2}O_{c2}$$

   in Chemical Formula 2, $1 < a2 \leq 1.5$, $0.9 \leq z2 \leq 1.0$, $0 \leq x2 \leq 0.05$, $2 \leq c2 \leq 2.3$ and $x2+z2=1$, and D comprises at least one of Al, Ti and Mg.

2. The positive electrode active material of claim 1, wherein the first particles are about 60 wt% to about 95 wt% on the basis of a total weight of the first particles and the second particles.

3. The positive electrode active material of claim 1 or claim 2,

   wherein the first particles comprise at least one first primary particle, and
   a size of the at least one first primary particle is in a range of about 50 nm to about 200 nm.

4. The positive electrode active material of claim 3, wherein the size of the at least one first primary particle is smaller than a size of the second average particle diameter.

5. The positive electrode active material of any preceding claim,

   wherein the first particles comprise a first coating layer containing carbon, and
   the carbon content in the first particles is in a range of about 1.5 wt% to about 2.5 wt%.

6. The positive electrode active material of any preceding claim,

   wherein the second particles comprise a second coating layer, and
   the second coating layer comprises at least one of Ti and Al.

7. The positive electrode active material of any preceding claim,

   wherein the second particles have a single particle form, and
   the second average particle diameter is in a range of about 3 $\mu$m to about 6 $\mu$m.

8. The positive electrode active material of any preceding claim, wherein the Ti content in the second particles is smaller than the Ti content in the first particles.

9. The positive electrode active material of any preceding claim,

    wherein D comprises Ti and Mg, and
    the Ti content in the second particles is smaller than the Mg content in the second particles.

10. The positive electrode active material of any preceding claim,

    wherein a form of the first particles is a secondary particle form, and
    the first average particle diameter is in a range of about 3 $\mu$m to about 10 $\mu$m.

11. The positive electrode active material of claim 10, wherein a porosity of the first particles is in a range of about 20% to about 40%.

12. The positive electrode active material of claim 10 or claim 11, wherein a span value of the first particles is in a range of about 0.3 to about 0.75.

13. The positive electrode active material of any one of claims 10 to 12, wherein the first average particle diameter is greater than the second average particle diameter.

14. The positive electrode active material of any of claims 1 to 9,

    wherein the first particles have a single particle form, and
    the first average particle diameter is in a range of about 0.5 $\mu$m to about 2.5 $\mu$m.

15. A positive electrode for a rechargeable lithium battery, the positive electrode comprising:

    a positive electrode current collector; and
    a positive electrode active material layer on the positive electrode current collector,
    wherein the positive electrode active material layer includes the positive electrode active material according to any one of claims 1 to 14, a conductive material and a binder.

# FIG. 1

COL1 AML1      30      COL2 AML2

10                    20

# FIG. 2

FIG. 3

# FIG. 4

100

50

72

40

71

10

30

20

# FIG. 5

# FIG. 6A

# FIG. 6B

# FIG. 7A

# FIG. 7B

## EUROPEAN SEARCH REPORT

Application Number

EP 25 16 8774

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/261175 A1 (XU XIAOFU [CN] ET AL) 17 August 2023 (2023-08-17) * paragraph [0042] - paragraph [0203]; claims 1-12; figures 1-6; table 1 * ----- | 1-15 | INV. H01M4/131 H01M4/136 H01M4/36 H01M4/525 |
| X | US 2007/026316 A1 (IMACHI NAOKI [JP] ET AL) 1 February 2007 (2007-02-01) * paragraph [0030] - paragraph [0101]; claims 1-20; figures 1-8; table 1 * ----- | 1-15 | H01M4/58 H01M4/62 H01M10/0525 |
| T | "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf [retrieved on 2020-05-15] * the whole document * ----- | 3,4,7, 10,13,14 | ADD. H01M4/02 |

**TECHNICAL FIELDS SEARCHED (IPC)**

H01M

The present search report has been drawn up for all claims

| Place of search | Date of completion of the search | Examiner |
|---|---|---|
| Munich | 7 October 2025 | Polisski, Sergej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

1

## ANNEX TO THE EUROPEAN SEARCH REPORT
## ON EUROPEAN PATENT APPLICATION NO.

EP 25 16 8774

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2025

| Patent document cited in search report | | Publication date | Patent family member(s) | | Publication date |
|---|---|---|---|---|---|
| US 2023261175 | A1 | 17-08-2023 | CN | 116601794 A | 15-08-2023 |
| | | | CN | 119153653 A | 17-12-2024 |
| | | | CN | 119297222 A | 10-01-2025 |
| | | | EP | 4224579 A1 | 09-08-2023 |
| | | | US | 2023261175 A1 | 17-08-2023 |
| | | | WO | 2023108352 A1 | 22-06-2023 |
| US 2007026316 | A1 | 01-02-2007 | CN | 1905265 A | 31-01-2007 |
| | | | JP | 2007035488 A | 08-02-2007 |
| | | | KR | 20070015001 A | 01-02-2007 |
| | | | US | 2007026316 A1 | 01-02-2007 |

For more details about this annex : see Official Journal of the European Patent Office, No. 12/82